# EUROPEAN PATENT SPECIFICATION

(11) **EP 1 198 600 B1**
(45) Date of publication and mention of the grant of the patent: **05.08.2015**
(21) Application number: 00931806.4
(22) Date of filing: 04.05.2000
(51) Int. Cl.: C22C 29/18, H01B 1/06

(54) **RESISTANCE-HEATING ELEMENT**
WIDERSTANDSHEIZELEMENT
ELEMENT DE CHAUFFAGE PAR RESISTANCE

(30) Priority: 20.05.1999 SE 9901827
(43) Date of publication of application: 24.04.2002
(60) Divisional application: 06114464.8
(73) Proprietor: Sandvik Intellectual Property AB, 811 81 Sandviken (SE)
(72) Inventor: SUNDBERG, Mats, S-722 46 Västeras (SE)
(86) International application number: PCT/SE2000/000871
(87) International publication number: WO 2000/071768

(56) References cited:
- SE-C- 210 969
- US-A- 4 323 484
- US-A- 4 528 121

## Description

The present invention relates to the use of an electrical resistance-heating element of molybdenum silicide type intended to sintering of metal powder.

Resistance-heating elements of the above-mentioned kind are existing since the 1950ies for instance with the trademark Kanthal Super. These consist usually mainly of a metal like phase of MoSi₂, alternatively of MoₓW₁₋ₓSi₂ and also an oxide phase of type aluminum silicate. Similar types of material can be used at element temperatures up to 1900°C in oxidizing atmosphere.

Patent SE-C-210969 or GB-B-924497 describe an element consisting of a silicide phase.

What makes this high working temperature possible is, besides the high melting point of the material (over 2000°C), the oxide layer of SiO₂, which will be formed and rapidly makes the basic material passive against accelerating oxidation and by this makes a long service time for the heating element possible. This outer layer gives a lasting protection in several furnace- and heat treating atmospheres, as air, oxygen, nitrogen/ hydrogen gas, cracked ammonia, and others. Conditions that often limit the use in these atmospheres are, when a high temperature of the element is prevailing simultaneous with a too low potential of oxygen, alternatively dew point, in the atmosphere. What happens if the critical proportions between dew point - temperature of the element is exceeded is, that the SiO₂-lay becomes unstable and by that after a certain time does not give any protection of the base material. For instance in hydrogen gas this occurs at an element temperature of 1300°C when the dew point is lower than about -30°C. To keep the SiO₂-layer remaining stable at a temperature of the element of 1450°C, a dew point over +20°C is required, i.e. a hydrogen gas containing more than 2.3 percent by volume. The stability properties of the SiO₂-layer make up a restriction of the usage of the element in certain connections.

An application example where such limitation manifests itself is at sintering of metal powder in order to produce stainless steel. Components of the stainless steel grade AISI316L are above all produced by pressing of powder, alternatively by injection moulding of metal powder. After evaporation of the binding agent at a low temperature often a final sintering in the range of temperature between 1300-1360°C in reduced atmosphere is required. The reducing gas can be pure hydrogen gas with a dew point at -40°C to -60°C, corresponding about 0.01 and 0.001 percent by volume of water respectively. The low dew point has to be obtained in order to reduce metal oxides during sintering process and by that resulting in that a material with high density and good mechanical properties. In such an application example an element temperature between 1400 and 1550°C should be required, dependent on the element shape and furnace design. Under those conditions the SiO₂-layer is consequently not stable on heating elements based on MoSi₂.

Heating elements which are used today in many furnaces for sintering of metal powder in the temperature range over 1250-1300°C are manufactured of above all molybdenum, but also of tungsten. A limitation of this material is, besides its relatively high total cost in furnaces, the requirement to hold the elements under all circumstances over 400°C in an atmosphere deficient in oxygen to avoid, that detrimental oxidation of the pure molybdenum metal occurs. For example at leakage of furnaces or other breakdowns those elements can consequently be damaged.

The alternative materials, which exist for electrical resistance heating under these conditions, are alloys and intermetallic compounds as FeCrAl, NiCr and MoSi₂ (e.g. Kanthal Super as above). The limitations of MoSi₂-material were described above. FeCrAl and NiCr form oxides of Al₂O₃ and Cr₂O₃ respectively on the surface under use in air. In reducing atmosphere, as dry hydrogen gas, the range of temperature under use is limited to about 1400°C for FeCrAl and 1250°C for for example NiCr of the trademark Nicrothal 80 respectively.

In case of NiCr-alloys the Cr₂O₃ is not stable above this temperature. In case of FeCrAl the Al₂O₃-layer certainly remains stable, but the service time of the material at this temperature is limited by the closely allied smelting temperature of about 1500°C. Thus, if the FeCrAl should be used for sintering of 316L, the requirements for high element temperatures would lead to very limited service times.

It would be desirable to use a material that combines the possibility to form alumina on the surface with a melting temperature considerable higher than 1500°C and by that, if necessary alternating could be used in reducing and oxidizing atmosphere. Besides, then the disadvantages of the molybdenum elements could be eliminated since the elements not always have to be used in an atmosphere deficient in oxygen.

The use of the specific silicide is disclosed in claim 1.

It has surprisingly shown, that by alloying MoSi₂ with A1 in a sufficient quantity and also an alumina phase, a phase of molybdenum alumina silicide, Mo(Si)₁₋ₓAlₓ)₂ is obtained, which is stable in dry hydrogen gas at high temperatures. It has for example shown under a corrosion test in hydrogen gas at 1450°C, that the compound material MoSi_{1.6}Al_{0.4}/Al₂O₃ does not show any corrosion after 200 hours, but an insignificant weight increase of 0.2%, which replies to an oxidation of aluminum in the aluminoslilicide into Al₂O₃. In a comparing investigation with Kanthal Super 1800, consisting of MoSi₂ and about 20 percent by volume of aluminum silicate it has shown, that the weight was reduced with about 30% under the same conditions. In this case besides the SiCO₂-layer both the MoSi₂-phase, Mo₅Si₃ and Mo₃Si and also the aluminum silicate containing binding agent were reduced.

It is reasonable to assume that even other compositions can be used to obtain similar results. For instance it has shown, that MoSi_{1.75}Alo_{0.25}/Al₂O₃ forms Al₂O₃ under oxidation in air at 1200°C. At values for x in the range of 0.1-0.6 the hexagonal, so called C-40-phase of Mo(Si,Al)₂, is stable. It is reasonable to assume that the present invention even could be applied with those compositions. The value of x should amount to 0.10-0.60, preferably 0.20-0.55.

Under experimental work in connection with the present invention it was proved suitable, that the silicide phase amounts to between 65 and 95 percent by weight of the total weight of the resistance element, preferably between 75 and 85 percent by weight.

As mentioned above, the resistance element contains besides the silicide phase alumina too.

The balance can consist of SiO₂, suitably between 0 and 1 percent by weight.

The above-described invention could is used in other sintering applications, where low oxygen potential, alternatively a low dew point, is required. This is sometimes the case at sintering of powder of tungsten heavy alloy, certain types of alloys of titanium and intermetallic compounds, and also of low alloyed steels. For instance the heavy alloy W-Cu have been sintered in hydrogen at 1400°C with a dew point at -36°C.

The above mentioned formed alumina is expected to be stable up to about 1595°C, which is the eutectic temperature in the system SiO₂-3Al₂O₃·2SiO₂ (mullite). This oxide is expected to have different corrosion properties than the pure alumina. Up to at least the temperature of the element of around 1595°C could thereby this material constitute a general alternative to the heating elements of molybdenum-type.

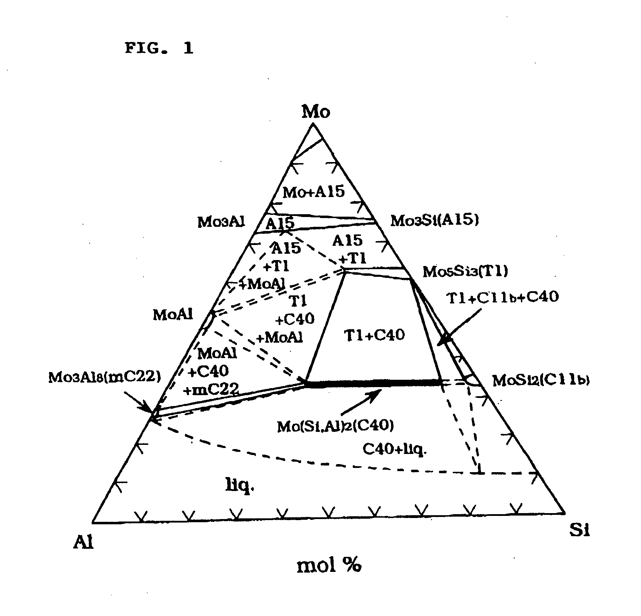

## Claims

1. Use of an electrical resistance element mainly consisting of a silicide phase according to the formula Mo(Si₁₋ₓAlₓ)₂, which phase forms alumina on the surface of the element, whereby x amounts to between 0.10 and 0.60, in sintering of metal powder, powder of tungsten heavy alloy, or of intermetallic compounds.

2. Use of an electrical resistance element according to claim 1 where the metal powder is of type iron based alloys.

3. Use of an electrical resistance element according to claim 2 where the metal powder is a stainless steel.

4. Use of an electrical resistance element according to claim 3 where the designation of the alloy is AISI316L.

5. Use of an electrical resistance element according to any of claim 1 when sintering alloys of titanium.

6. Use of an electrical resistance element according to any of claim 1 when sintering of low alloyed steels.

7. Use of an electrical resistance element according to any of the preceding claims whereby x amounts to between 0.20 and 0.55.

8. Use of an electrical resistance element according to any of the preceding claims whereby the silicide phase amounts to between 65 and 95 percent by weight of the total weight of the resistance element, preferably between 75 and 85 percent by weight.

9. Use of an electrical resistance element according to any of the preceding claims whereby the element contains a balance of SiO₂ besides the mentioned silicide phase and prospective Al₂O₃.

## Patentansprüche

1. Verwendung eines elektrischen Widerstandselementes, welches hauptsächlich aus einer Silizid-Phase gemäß der Formel Mo(Si₁₋ₓAlₓ)₂ besteht, wobei diese Phase auf der Oberfläche des Elementes Aluminiumoxid bildet, wobei x zwischen 0,1 und 0,6 liegt, beim Sintern von Metallpulver, Pulver einer schweren Wolframlegierung oder von intermetallischen Verbindungen.

2. Verwendung eines elektrischen Widerstandselementes nach Anspruch 1, wobei das Metallpulver von dem Typ eisenbasierter Legierungen ist.

3. Verwendung eines elektrischen Widerstandselementes nach Anspruch 2, wobei das Metallpulver ein rostfreier Stahl ist.

4. Verwendung eines elektrischen Widerstandselementes nach Anspruch 3, wobei die Bezeichnung der Legierung AlSl316L ist.

5. Verwendung eines elektrischen Widerstandselementes nach Anspruch 1 beim Sintern von Titanlegierungen.

6. Verwendung eines elektrischen Widerstandselementes nach Anspruch 1 beim Sintern von niedriglegierten Stählen.

7. Verwendung eines elektrischen Widerstandselementes nach einem der vorstehenden Ansprüche, wobei x zwischen 0,20 und 0,55 beträgt.

8. Verwendung eines elektrischen Widerstandselementes nach einem der vorstehenden Ansprüche, wobei die Menge der Silizid-Phase zwischen 65 und 95 Gew.-% des gesamten Gewichtes des Widerstandselementes beträgt, vorzugsweise zwischen 75 und 85 Gew.-%.

9. Verwendung eines elektrischen Widerstandselementes nach einem der vorstehenden Ansprüche, wobei das Element neben der bereits erwähnten Silizid-Phase und dem möglicherweise vorhandenen Al₂O₃ als Restbestandteil SiO₂ enthält.

## Revendications

1. Utilisation d'un élément de résistance électrique constitué principalement d'une phase de siliciure selon la formule Mo(Si₁₋ₓAlₓ)₂ laquelle phase forme de l'alumine sur la surface de l'élément, la valeur de x étant comprise entre 0,10 et 0,60, pour le frittage de poudre métallique, de poudre d'alliages lourd en tungstène ou de composés intermétalliques.

2. Utilisation d'un élément de résistance électrique selon la revendication 1, où la poudre de métal est du type des alliages à base de fer.

3. Utilisation d'un élément de résistance électrique selon la revendication 2, où la poudre de métal est un acier inoxydable.

4. Utilisation d'un élément de résistance électrique selon la revendication 3, où la désignation de l'alliage est AISI316L.

5. Utilisation d'un élément de résistance électrique selon la revendication 1, pour le frittage d'alliage de titane.

6. Utilisation d'un élément de résistance électrique selon la revendication 1, pour le frittage d'aciers faiblement alliés.

7. Utilisation d'un élément de résistance électrique selon l'une quelconque des revendications précédentes, où la valeur de x est comprise entre 0,20 et 0,55.

8. Utilisation d'un élément de résistance électrique selon l'une quelconque des revendications précédentes, où la phase de siliciure est comprise entre 65 et 95 pour cent en poids du poids total de l'élément de résistance, de préférence entre 75 et 85 pour cent en poids.

9. Utilisation d'un élément de résistance électrique selon l'une quelconque des revendications précédentes, où l'élément contient un complément de SiO₂ outre la phase de siliciure mentionnée et l'Al₂O₃ souhaité.
